# EUROPEAN PATENT SPECIFICATION

(11) **EP 2 721 689 B1**
(45) Date of publication and mention of the grant of the patent: **09.05.2018**
(21) Application number: 12800105.4
(22) Date of filing: 07.06.2012
(51) Int. Cl.: H01M 10/052, H01M 10/04, H01M 10/0562, H01M 6/40, H01M 10/0585, H01M 4/04, H01M 4/139, H01M 4/70

(54) **THIN FILM BATTERY FABRICATION WITH MASK-LESS ELECTROLYTE DEPOSITION**
HERSTELLUNG EINER DÜNNSCHICHTBATTERIE MIT MASKENLOSER ELEKTROLYTABSCHEIDUNG
FABRICATION DE BATTERIE À FILM MINCE À DÉPÔT D'ÉLECTROLYTE SANS MASQUE

(30) Priority: 17.06.2011 US 201161498490 P
(43) Date of publication of application: 23.04.2014
(73) Proprietor: Applied Materials, Inc., Santa Clara, CA 95054 (US)
(72) Inventor: SONG, Daoying, San Jose, California 95124 (US); JIANG, Chong, Cupertino, CA 95014 (US); KWAK, Byung Sung Leo, Portland, OR 97229 (US)
(74) Representative: Zimmermann & Partner Patentanwälte mbB
(86) International application number: PCT/US2012/041410
(87) International publication number: WO 2012/173874

(56) References cited:
- EP-A2- 1 174 934
- WO-A1-2008/134053
- WO-A1-2009/055529
- WO-A1-2010/022214
- JP-A- S61 170 077
- KR-A- 20100 130 450
- US-A1- 2008 102 363
- US-A1- 2009 148 764
- US-A1- 2009 208 671
- US-A1- 2009 208 671
- US-A1- 2010 282 288
- US-A1- 2010 323 471
- US-B1- 6 764 525

## Description

Embodiments of the present invention relate to fabrication processes for thin film batteries.

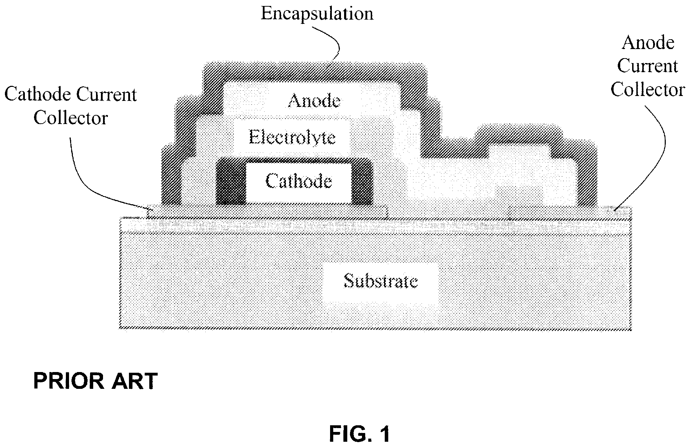

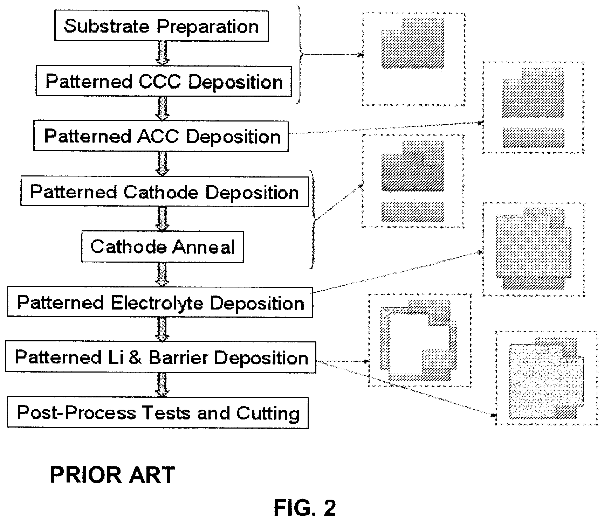

Thin film batteries (TFBs) have been projected to dominate the micro-energy applications space. TFBs are known to exhibit several advantages over conventional battery technology such as superior form factors, cycle life, power capability and safety. FIG. 1 shows a cross-sectional representation of a typical thin film battery (TFB) and FIG. 2 shows a flow diagram for TFB fabrication along with corresponding plan views of the patterned TFB layers. However, there are challenges that still need to be overcome to allow cost effective high volume manufacturing (HVM) of TFBs.

The electrolyte layer (e.g. LiPON) is the most challenging TFB device layer to deposit using a shadow mask because of the deposition process - radio frequency physical vapor deposition (RF PVD) magnetron sputtering - and also due to the electrolyte layer typically being one of the thickest device layers and typically requiring a longer deposition time than other layers. The electrolyte layer is typically deposited with a physical shadow mask in place. The substrate temperature increases with deposition time and RF power, which can result in warping of the shadow mask and loss of mask alignment. In an attempt to combat these problems, the shadow mask is typically fixed in place with Kapton® tape, and/or in some instances by magnets on the backside of the substrate. However, the additional backside magnets are found to interact with the RF PVD process, which dramatically reduces TFB yields. Furthermore, Kapton® tape generally cannot withstand the higher temperature and higher power processes that are required for higher deposition rates (and thus higher throughput), therefore using Kapton® necessitates the use of lower deposition rate processes to avoid shadow mask alignment shifts and inaccurate pattern transfer. In conclusion, there is a need for an alternative to shadow masks for patterning the electrolyte layer during physical vapor deposition (PVD).

Document WO 2009/055529 A1 describes a method of fabricating a thin film battery, comprising: in situ patterned depositing of at least one patterned current collector, a patterned cathode, a patterned electrolyte layer, a patterned anode and a patterned encapsulation layer, wherein said in situ patterned depositing includes depositing through shadow masks. Further, physical maskless patterning steps using, e.g., laser scribing are disclosed.

Document US 2009/0208671 A1 is related to a method of fabricating a battery comprising blanket deposition of films on a substrate, followed by a pulsed laser ablation process for forming shaped features from the deposited films.

Embodiments of the present invention may improve the manufacturability of TFBs on large area substrates at high volume and throughput. This may significantly reduce the cost for broad market applicability as well as provide yield improvements and improved pattern alignment accuracy.

Accordingly, the method of embodiments of the invention comprises the features of claim 1 and 14. Further details, aspects and modification of other embodiments are described in the dependent claims, the detailed specification and the drawings.

The concepts and methods of the present invention are intended to permit reduction of the cost and complexity of thin film battery (TFB) high volume manufacturing (HVM) by eliminating the use of shadow masks for electrolyte deposition. According to aspects of the invention, these and other advantages are achieved with the use of a selective laser ablation process, where the laser patterning process removes the blanket electrolyte layer in selected areas while leaving the current collector layers below intact.

According to some embodiments of the present invention, a method of fabricating a thin film battery may include blanket deposition of an electrolyte layer followed by selective laser patterning of the electrolyte layer. Some or all of the other device layers may be formed using shadow masks. Process flows are described which integrate the selective laser patterning of the electrolyte layer into the flow of deposition steps using shadow masks.

Furthermore, this invention describes tools for carrying out the above method. be formed using shadow masks. Process flows are described which integrate the selective laser patterning of the electrolyte layer into the flow of deposition steps using shadow masks.

Furthermore, this invention describes tools for carrying out the above method.

### BRIEF DESCRIPTION OF THE DRAWINGS

These and other aspects and features of the present invention will become apparent to those ordinarily skilled in the art upon review of the following description of specific embodiments of the invention in conjunction with the accompanying figures, wherein:
FIG. 1 is a cross-sectional representation of a thin film battery (TFB);
FIG. 2 is a flow diagram for TFB fabrication along with corresponding plan views of the patterned TFB layers;
FIGS. 3A-3H are plan-view representations of sequential steps in a process flow for fabrication of a TFB, according to some embodiments of the present invention;
FIG. 4 is a schematic illustration of a thin film deposition cluster tool for TFB fabrication, according to some embodiments of the present invention;
FIG. 5 is a representation of a thin film deposition system with multiple in-line tools for TFB fabrication, according to some embodiments of the present invention;
FIG. 6 is a representation of an in-line deposition tool for TFB fabrication, according to some embodiments of the present invention;
FIG. 7 is a discharge curve for a TFB fabricated according to some embodiments of the present invention; and
FIG. 8 shows cycling data for the TFB of FIG. 7.

### DETAILED DESCRIPTION

Embodiments of the present invention will now be described in detail with reference to the drawings, which are provided as illustrative examples of the invention so as to enable those skilled in the art to practice the invention. The drawings provided herein include representations of devices and device process flows which are not drawn to scale. Notably, the figures and examples below are not meant to limit the scope of the present invention to a single embodiment. In the present specification, an embodiment showing a singular component should not be considered limiting; rather, the invention is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such.

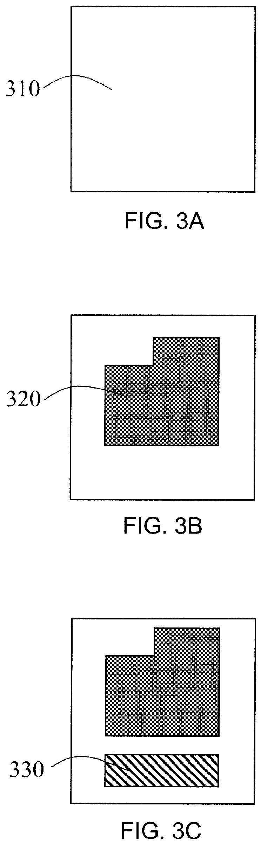

In conventional TFB manufacturing all layers are patterned using in situ shadow masks which are fixed to the device substrate by backside magnets and/or Kapton® tape. According to some embodiments of the present invention, instead of an in situ patterned deposition, blanket deposition without any shadow mask followed by laser patterning is proposed for the electrolyte layer in the TFB fabrication process (see FIGS. 3A-3H).

The present invention utilizes blanket deposition of electrolyte (LiPON) and ex situ laser patterning of electrolyte to improve yields, throughputs and pattern accuracy. The laser light is incident on the electrolyte from above - from the TFB stack side of the substrate. Blanket electrolyte (LiPON) deposition eliminates use of the electrolyte shadow mask, which relaxes constraints on the RF PVD process caused by potential thermal expansion induced alignment shifts of the mask and deleterious interactions between magnets for holding down the mask and the RF PVD deposition process. Blanket deposition of electrolyte (LiPON) therefore increases manufacturing throughputs, alignment accuracy and yields. For the following reasons, it is a practical, low cost process to completely ablate the LiPON from select areas of the cathode current collector (CCC) and the anode current collector (ACC) using picosecond (ps) or femtosecond (fs) lasers with little or no effect on the CCC and ACC. First, LiPON has a large absorption depth over the range from UV to IR wavelengths, for example, the absorption depth is approximately 500 nm at 355 nm wavelength. Second, the ACC and CCC generally are metals with very small optical absorption depths, for example, the absorption depth is approximately 14 nm at 355 nm wavelength. Third, the ps or fs laser ablation depth of a material is primarily determined by the optical absorption depth of said material. Fourth, only a very thin top part of the ACC or CCC is affected by the laser ablation, even if excessive laser fluence is used to remove the LiPON layer.

The laser processing and ablation patterns for the electrolyte layer may be designed to form TFBs with identical device structures to those fabricated using electrolyte masks, although more accurate edge placement may provide higher device densities and other design improvements. Higher yield and device density for TFBs over current manufacturing processes are expected for some embodiments of processes of the present invention since using an electrolyte shadow mask in TFB fabrication processes is a likely source of yield killing defects and removing the electrolyte shadow mask may remove these defects. It is also expected that some embodiments of processes of the present invention will provide better patterning accuracy of the electrolyte layer than for the equivalent shadow mask process, which will allow higher TFB device densities on a substrate. Further, some embodiments of the present invention are expected to relax constraints on the RF PVD process (restricted to lower power and temperature in the equivalent shadow mask deposition process) caused by potential thermal expansion induced alignment issues of the electrolyte shadow mask, and increase throughputs due to a significant deposition rate increase of the electrolyte.

Conventional laser scribe or projection technology may be used for the selective laser patterning processes of the present invention. A single laser may be used which generally is a laser with picosecond or femtosecond pulse width (selectivity controlled by laser fluence/dose and different optical response). The scanning methods of the laser scribe system may be stage movement, beam movement by Galvanometers, or both. The laser spot size of the laser scribe system may be adjusted from 100 microns to 1 cm. The laser area size of laser projection system may be 1 mm² or larger. Furthermore, other laser types and configurations may be used.

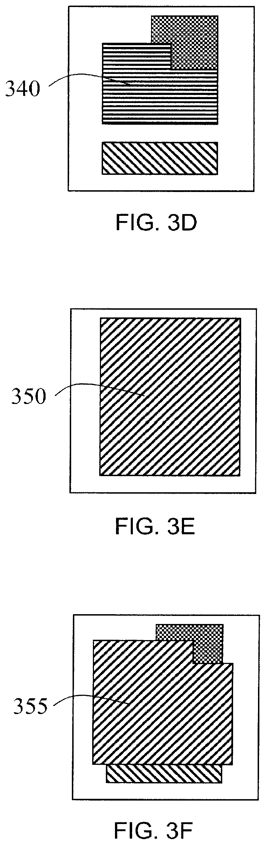

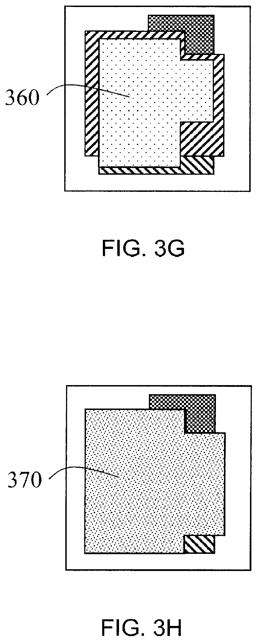

FIGS. 3A-3H illustrate the fabrication steps of a TFB according to some embodiments of the present invention - this process flow includes a blanket deposition of electrolyte, followed by laser patterning. FIG. 3A shows substrate 310, which may be glass, ceramic, metal, silicon, mica, rigid material, flexible material, plastic / polymer, etc. Cathode current collector (CCC) layer 320 is deposited on substrate 310 using a shadow mask, as shown in FIG. 3C. Anode current collector (ACC) layer 330 is deposited on substrate 310 using a shadow mask, as shown in FIG. 3C. Cathode layer 340 is deposited over the CCC using a shadow mask, as shown in FIG. 3D. The cathode may then be annealed. The cathode may be annealed at more than 600 °C for more than 2 hours to form a crystalline structure. The annealing process may be done before or after laser patterning. A blanket electrolyte 350 is deposited, as shown in FIG. 3E. Laser ablation forms the patterned electrolyte layer 355, which exposes parts of the CCC and ACC, as shown in FIG. 3F. Patterned anode (e.g. Li) 360 is deposited using a shadow mask, and dry lithiation can take place here if needed - see FIG. 3G. Blanket encapsulation layer 370 (dielectric or polymer) is deposited using a shadow mask, as shown in FIG. 3H.

Bonding pads may be deposited using shadow masks after: patterned cathode layer deposition and anneal; laser patterning of electrolyte layer; patterned anode layer deposition; or patterned barrier layer deposition. Furthermore, if the cathode anneal is a low temperature process, then in addition to the list above, the bonding pads may also be deposited using shadow masks after the patterned ACC layer deposition.

Further variations on the above TFB fabrication process may include: (1) combining the patterned CCC and ACC deposition steps into a single step; and (2) moving the step of depositing the patterned ACC to after either the patterned cathode deposition and anneal or after the laser patterning of the blanket electrolyte deposition. Note that the options for patterned bonding pad deposition remain the same for these variations.

The metal current collectors, both on the cathode and anode side, need to function as protective barriers to the shuttling lithium ions. In addition, the anode current collector needs to function as a barrier to the oxidants (H₂O, O₂, N₂, etc.) from the ambient. Therefore, the material or materials of choice should have minimal reaction or miscibility in contact with lithium in "both directions" - i.e., the Li moving into the metallic current collector to form a solid solution and vice versa. In addition, the material choice for the metallic current collector should have low reactivity and diffusivity to those oxidants. Based on published binary phase diagrams, some potential candidates for the first requirements are Ag, Al, Au, Ca, Cu, Co, Sn, Pd, Zn and Pt. With some materials, the thermal budget may need to be managed to ensure there is no reaction/diffusion between the metallic layers. If a single metal element is incapable of meeting both requirements, then alloys may be considered. Also, if a single layer is incapable of meeting both requirements, then dual (multiple) layers may be used. Furthermore, in addition an adhesion layer may be used in combination with a layer of one of the aforementioned refractory and non-oxidizing layers - for example, a Ti adhesion layer in combination with Au. The current collectors may be deposited by (pulsed) DC sputtering of metal targets (approximately 300 nm) to form the layers (e.g., metals such as Cu, Ag, Pd, Pt and Au, metal alloys, metalloids or carbon black). Furthermore, there are other options for forming the protective barriers to the shuttling lithium ions, such as dielectric layers, etc..

RF sputtering has been the traditional method for depositing the cathode layer 340 (e.g., LiCoO₂) and electrolyte layer 350 (e.g., Li₃PO₄ in N₂), which are both insulators (more so for the electrolyte). However, pulsed DC has also been used for LiCoO₂ deposition. Furthermore, other deposition techniques may be used.

The Li layer 360 can be formed using an evaporation or sputtering process. The Li layer will generally be a Li alloy, where the Li is alloyed with a metal such as tin or a semiconductor such as silicon, for example. The Li layer can be about 3 µm thick (as appropriate for the cathode and capacity balancing) and the encapsulation layer 370 can be 3 µm or thicker. The encapsulation layer can be a multilayer of parylene and metal and/or dielectric. Note that, between the formation of the Li layer 360 and the encapsulation layer 370, the part must be kept in an inert environment, such as argon gas; however, after blanket encapsulation layer deposition the requirement for an inert environment will be relaxed.

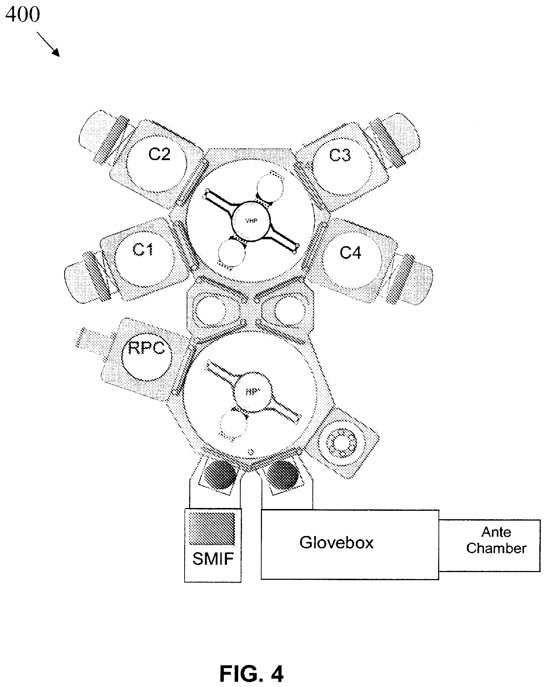

Figure 4 is a schematic illustration of a processing system 400 for fabricating a TFB device according to some embodiments of the present invention. The processing system 400 includes a standard mechanical interface (SMIF) to a cluster tool equipped with a reactive plasma clean (RPC) chamber and process chambers C1-C4, which may be utilized in the process steps described above. A glovebox may also be attached to the cluster tool if needed. The glovebox can store substrates in an inert environment (for example, under a noble gas such as He, Ne or Ar), which is useful after alkali metal/alkaline earth metal deposition. An ante chamber to the glovebox may also be used if needed - the ante chamber is a gas exchange chamber (inert gas to air and vice versa) which allows substrates to be transferred in and out of the glovebox without contaminating the inert environment in the glovebox. (Note that a glovebox can be replaced with a dry room ambient of sufficiently low dew point, as used by lithium foil manufacturers.) The chambers C1-C4 can be configured for process steps for manufacturing thin film battery devices which may include: deposition of a cathode layer (e.g. LiCoO₂ by RF sputtering) using a shadow mask; deposition of an electrolyte layer (e.g. Li₃PO₄ by RF sputtering in N₂); deposition of an alkali metal or alkaline earth metal, using a shadow mask; and selective laser patterning of the blanket electrolyte layer. Examples of suitable cluster tool platforms include AKT's display cluster tools, such as the Generation 10 display cluster tools or Applied Material's Endura™ and Centura™ for smaller substrates. It is to be understood that while a cluster arrangement has been shown for the processing system 400, a linear system may be utilized in which the processing chambers are arranged in a line without a transfer chamber so that the substrate continuously moves from one chamber to the next chamber.

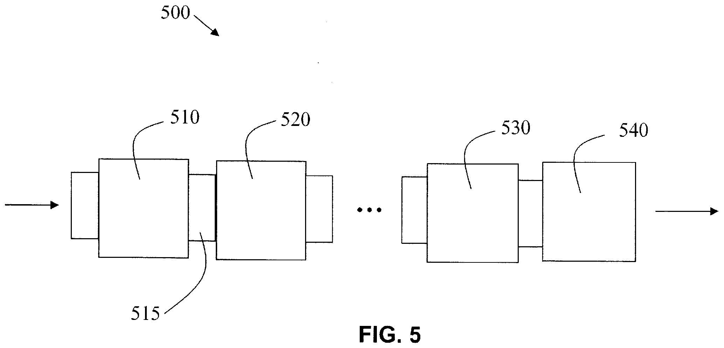

Figure 5 shows a representation of an in-line fabrication system 500 with multiple in-line tools 510, 520, 530, 540, etc., according to some embodiments of the present invention. In-line tools may include tools for depositing and patterning all the layers of a TFB device. Furthermore, the in-line tools may include pre- and post-conditioning chambers. For example, tool 510 may be a pump down chamber for establishing a vacuum prior to the substrate moving through a vacuum airlock 515 into a deposition tool 520. Some or all of the in-line tools may be vacuum tools separated by vacuum airlocks 515. Note that the order of process tools and specific process tools in the process line will be determined by the particular TFB device fabrication method being used - specific examples of which are provided above. Furthermore, substrates may be moved through the in-line fabrication system oriented either horizontally or vertically. Yet furthermore, selective laser patterning modules may be configured for substrates to be stationary during laser ablation, or moving.

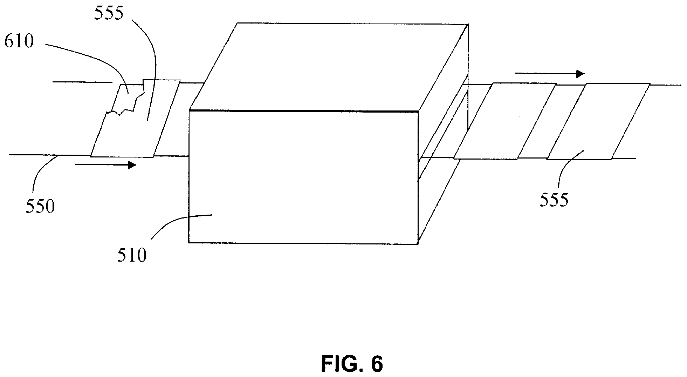

In order to illustrate the movement of a substrate through an in-line fabrication system such as shown in Fig. 5, in Figure 6 a substrate conveyer 550 is shown with only one in-line tool 510 in place. A substrate holder 555 containing a substrate 610 (the substrate holder is shown partially cut-away so that the substrate can be seen) is mounted on the conveyer 550, or equivalent device, for moving the holder and substrate through the in-line tool 510, as indicated. Suitable in-line platforms for processing tool 510 are Applied Material's Aton™ and New Aristo™.

Furthermore, a laser patterning tool may be a stand-alone tool.

A first apparatus for forming thin film batteries according to embodiments of the present invention may comprise: a first system for in situ patterned depositing of a patterned cathode current collector, a patterned anode current collector and a patterned cathode, and for blanket depositing of an electrolyte layer; and a second system for laser patterning of the electrolyte layer to reveal a portion of the cathode current collector and a portion of the anode current collector; and a third system for in situ patterned depositing of a patterned anode and a patterned encapsulation layer; wherein the in situ patterned depositing includes depositing through shadow masks. The first system and the third system may be the same system. The first system and the second system may be the same system. The first system, second system and the third system may be the same system. Furthermore, the third system may also be configured for in situ patterned deposition of bonding pads, or a fourth system may be provided for bonding pad deposition. The systems may be cluster tools, in-line tools, stand-alone tools, or a combination of one or more of the aforesaid tools. The systems may include some tools which are common to one or more of the other systems.

A second apparatus for forming thin film batteries according to embodiments of the present invention may comprise: a first system for in situ patterned depositing of a patterned cathode current collector and a patterned cathode, and for blanket depositing of an electrolyte layer; and a second system for laser patterning of the electrolyte layer to reveal a portion of the cathode current collector; and a third system for in situ patterned depositing of a patterned anode current collector, a patterned anode and a patterned encapsulation layer; wherein the in situ patterned depositing includes depositing through shadow masks. The first system and the third system may be the same system. The first system and the second system may be the same system. The first system, second system and the third system may be the same system. Furthermore, the third system may also be configured for in situ patterned deposition of bonding pads, or a fourth system may be provided for bonding pad deposition. The systems may be cluster tools, in-line tools, stand-alone tools, or a combination of one or more of the aforesaid tools. The systems may include some tools which are common to one or more of the other systems.

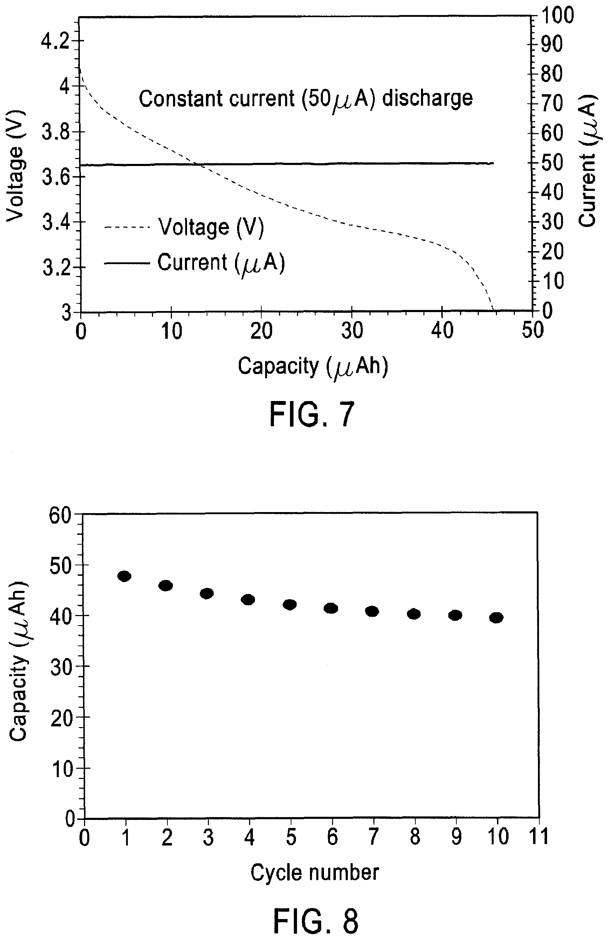

FIG. 7 shows a discharge curve for a TFB cell fabricated according to some embodiments of the present invention - the electrolyte layer being formed by a maskless LiPON deposition followed by laser patterning. FIG. 8 shows cycling data for the same TFB cell. Note that the decrease in capacity with cycling is due to the only source of Li in this particular cell being the original cathode, there having been no separately deposited lithium anode; furthermore, this cell does not have an encapsulation layer and consequently lithium is lost over time to residual oxidants in the argon ambient glovebox used for testing the cell. In practice, commercial grade devices will be fabricated with extra lithium and an encapsulation layer, as described above.

Although the present invention has been particularly described with reference to certain embodiments thereof, it should be readily apparent to those of ordinary skill in the art that changes and modifications in the form and details may be made, wherein the scope of the invention is defined by the attached claims.

## Claims

1. A method of fabricating a thin film battery, comprising:
in situ patterned depositing of a patterned cathode current collector (320) using a shadow mask and in situ patterned depositing of a patterned anode current collector (330) using a shadow mask and in situ patterned depositing of a patterned cathode (340) using a shadow mask;
blanket depositing of an electrolyte layer (350) over said patterned cathode current collector (320) and said patterned anode current collector (330) and said patterned cathode (340);
laser patterning of said electrolyte layer (350) to reveal a portion of said patterned cathode current collector (320) and a patterned anode current collector (330); and
in situ patterned depositing of a patterned anode (360) using a shadow mask and in situ patterned depositing of a patterned encapsulation layer (370) using a shadow mask.

2. The method of claim 1, further comprising in situ patterned deposition of bonding pads.

3. The method of claim 2, wherein said in situ patterned depositing of said bonding pads is after said in situ patterned depositing of said patterned anode current collector (330).

4. The method of claim 2, wherein said in situ patterned depositing of said bonding pads is after said in situ patterned depositing of said patterned anode (360).

5. The method of claim 2, wherein said in situ patterned depositing of said bonding pads is after said in situ patterned depositing of said patterned encapsulation layer (370).

6. The method of claim 2, wherein said in situ patterned depositing of said bonding pads is after said laser patterning of said electrolyte layer (350).

7. The method of claim 2, further comprising annealing said cathode (340).

8. The method of claim 7, wherein said in situ patterned depositing of said bonding pads is after the cathode anneal.

9. The method of claim 1, wherein said anode current collector (330) and said cathode current collector (320) are deposited simultaneously.

10. The method of claim 1, further comprising annealing said cathode.

11. The method of claim 10, wherein said anode current collector (330) is deposited after the cathode anneal.

12. The method of claim 1, wherein said blanket depositing of an electrolyte layer (350) includes RF sputter depositing said electrolyte layer.

13. The method of claim 1, wherein said electrolyte layer is a LiPON layer.

14. A method of fabricating a thin film battery, comprising:
in situ patterned depositing of a patterned cathode current collector (320) using a shadow mask and in situ patterned depositing of a patterned cathode (340) using a shadow mask;
blanket depositing of an electrolyte layer (350) over said patterned cathode current collector (320) and said patterned cathode (340);
laser patterning of said electrolyte layer (350) to reveal a portion of said patterned cathode current collector (320); and
in situ patterned depositing of a patterned anode current collector (330) using a shadow mask,in situ patterned depositing of a patterned anode (360) using a shadow mask and in situ patterned depositing of a patterned encapsulation layer (370) using a shadow mask.

## Patentansprüche

1. Verfahren zum Herstellen einer Dünnschichtbatterie, umfassend:
strukturiertes In-situ-Abscheiden eines strukturierten Kathodenstromkollektors (320) unter Verwendung einer Lochmaske und strukturiertes In-situ-Abscheiden eines strukturierten Anodenstromkollektors (330) unter Verwendung einer Lochmaske und strukturiertes In-situ-Abscheiden einer strukturierten Kathode (340) unter Verwendung einer Lochmaske;
flächiges Abscheiden einer Elektrolytschicht (350) über dem strukturierten Kathodenstromkollektor (320) und dem strukturierten Anodenstromkollektor (330) und der strukturierten Kathode (340);
lasergestütztes Strukturieren der Elektrolytschicht (350), um einen Abschnitt des strukturierten Kathodenstromkollektors (320) und eines strukturierten Anodenstromkollektors (330) freizulegen; und
strukturiertes In-situ-Abscheiden einer strukturierten Anode (360) unter Verwendung einer Lochmaske und strukturiertes In-situ-Abscheiden einer strukturierten Einkapselungsschicht (370) unter Verwendung einer Lochmaske.

2. Verfahren nach Anspruch 1, weiter umfassend strukturiertes In-situ-Abscheiden von Bondinseln.

3. Verfahren nach Anspruch 2, wobei das strukturierte In-situ-Abscheiden der Bondinseln nach dem strukturierten In-situ-Abscheiden des strukturierten Anodenstromkollektors (330) erfolgt.

4. Verfahren nach Anspruch 2, wobei das strukturierte In-situ-Abscheiden der Bondinseln nach dem strukturierten In-situ-Abscheiden der strukturierten Anode (360) erfolgt.

5. Verfahren nach Anspruch 2, wobei das strukturierte In-situ-Abscheiden der Bondinseln nach dem strukturierten In-situ-Abscheiden der strukturierten Einkapselungsschicht (370) erfolgt.

6. Verfahren nach Anspruch 2, wobei das strukturierte In-situ-Abscheiden der Bondinseln nach dem lasergestützten Strukturieren der Elektrolytschicht (350) erfolgt.

7. Verfahren nach Anspruch 2, weiter umfassend das Glühen der Kathode (340).

8. Verfahren nach Anspruch 7, wobei das strukturierte In-situ-Abscheiden der Bondinseln nach dem Kathodenglühen erfolgt.

9. Verfahren nach Anspruch 1, wobei der Anodenstromkollektor (330) und der Kathodenstromkollektor (320) gleichzeitig abgeschieden werden.

10. Verfahren nach Anspruch 1, weiter umfassend das Glühen der Kathode.

11. Verfahren nach Anspruch 10, wobei der Anodenstromkollektor (330) nach dem Kathodenglühen abgeschieden wird.

12. Verfahren nach Anspruch 1, wobei das flächige Abscheiden einer Elektrolytschicht (350) HF-Sputterabscheiden der Elektrolytschicht umfasst.

13. Verfahren nach Anspruch 1, wobei die Elektrolytschicht eine LiPON-Schicht ist.

14. Verfahren zum Herstellen einer Dünnschichtbatterie, umfassend:
strukturiertes In-situ-Abscheiden eines strukturierten Kathodenstromkollektors (320) unter Verwendung einer Lochmaske und strukturiertes In-situ-Abscheiden einer strukturierten Kathode (340) unter Verwendung einer Lochmaske;
flächiges Abscheiden einer Elektrolytschicht (350) über dem strukturierten Kathodenstromkollektor (320) und der strukturierten Kathode (340);
lasergestütztes Strukturieren der Elektrolytschicht (350), um einen Abschnitt des strukturierten Kathodenstromkollektors (320) freizulegen; und
strukturiertes In-situ-Abscheiden eines strukturierten Anodenstromkollektors (330) unter Verwendung einer Lochmaske, strukturiertes In-situ-Abscheiden einer strukturierten Anode (360) unter Verwendung einer Lochmaske und strukturiertes In-situ-Abscheiden einer strukturierten Einkapselungsschicht (370) unter Verwendung einer Lochmaske.

## Revendications

1. Procédé de fabrication d'une batterie à film mince, comprenant :
un dépôt à motif in situ d'un collecteur de courant de cathode à motif (320) en utilisant un masque d'ombre et un dépôt à motif in situ d'un collecteur de courant d'anode à motif (330) en utilisant un masque d'ombre et un dépôt à motif in situ d'une cathode à motif (340) en utilisant un masque d'ombre ;
un dépôt de couverture d'une couche d'électrolyte (350) par dessus ledit collecteur de courant de cathode à motif (320) et ledit collecteur de courant d'anode à motif (330) et ladite cathode à motif (340) ;
une texturation de motif par laser de ladite couche d'électrolyte (350) pour révéler une portion dudit collecteur de courant de cathode à motif (320) et d'un collecteur de courant d'anode à motif (330) ; et
un dépôt à motif in situ d'une anode à motif (360) en utilisant un masque d'ombre et un dépôt à motif in situ d'une couche d'encapsulation à motif (370) en utilisant un masque d'ombre.

2. Procédé selon la revendication 1, comprenant en outre un dépôt à motif in situ de plots de liaison.

3. Procédé selon la revendication 2, dans lequel ledit dépôt à motif in situ desdits plots de liaison s'effectue après ledit dépôt à motif in situ dudit collecteur de courant d'anode à motif (330).

4. Procédé selon la revendication 2, dans lequel ledit dépôt à motif in situ desdits plots de liaison s'effectue après ledit dépôt à motif in situ de ladite anode à motif (360).

5. Procédé selon la revendication 2, dans lequel ledit dépôt à motif in situ desdits plots de liaison s'effectue après ledit dépôt à motif in situ de ladite couche d'encapsulation à motif (370).

6. Procédé selon la revendication 2, dans lequel ledit dépôt à motif in situ desdits plots de liaison s'effectue après ladite texturation de motif par laser de ladite couche d'électrolyte (350).

7. Procédé selon la revendication 2, comprenant en outre un recuit de ladite cathode (340).

8. Procédé selon la revendication 7, dans lequel ledit dépôt à motif in situ desdits plots de liaison s'effectue après le recuit de cathode.

9. Procédé selon la revendication 1, dans lequel ledit collecteur de courant d'anode (330) et ledit collecteur de courant de cathode (320) sont déposés simultanément.

10. Procédé selon la revendication 1, comprenant en outre le recuit de ladite cathode.

11. Procédé selon la revendication 10, dans lequel ledit collecteur de courant d'anode (330) est déposé après le recuit de cathode.

12. Procédé selon la revendication 1, dans lequel ledit dépôt de couverture d'une couche d'électrolyte (350) comprend un dépôt par pulvérisation radiofréquence de ladite couche d'électrolyte.

13. Procédé selon la revendication 1, dans lequel ladite couche d'électrolyte est une couche LiPON.

14. Procédé de fabrication d'une batterie à film mince, comprenant :
un dépôt à motif in situ d'un collecteur de courant de cathode à motif (320) en utilisant un masque d'ombre et un dépôt à motif in situ d'une cathode à motif (340) en utilisant un masque d'ombre ;
un dépôt de couverture d'une couche d'électrolyte (350) par dessus ledit collecteur de courant de cathode à motif (320) et ladite cathode à motif (340) ;
une texturation de motif par laser de ladite couche d'électrolyte (350) pour révéler une portion dudit collecteur de courant de cathode à motif (320) ; et
un dépôt à motif in situ d'un collecteur de courant d'anode à motif (330) en utilisant un masque d'ombre, un dépôt à motif in situ d'une anode à motif (360) en utilisant un masque d'ombre, et un dépôt à motif in situ d'une couche d'encapsulation à motif (370) en utilisant un masque d'ombre.
